# EUROPEAN PATENT SPECIFICATION

(11) **EP 0 381 607 B1**
(45) Date of publication and mention of the grant of the patent: **17.01.1996**
(21) Application number: 90500009.7
(22) Date of filing: 26.01.1990
(51) Int. Cl.: F16D 41/06, F16D 41/08, F16D 43/02

(54) **Bi-directional anti-return mechanism**
Mechanismus für Rücklaufverhinderung in beiden Drehrichtungen
Mécanisme anti retour bidirectionnel

(30) Priority: 01.02.1989 ES 8900345; 22.12.1989 ES 8904341
(43) Date of publication of application: 08.08.1990
(73) Proprietor: Sanz Serrano, Martin, E-28006 Madrid (ES); Hernando Sanz, Antonio, E-28006 Madrid (ES)
(72) Inventor: Martin Sanz, Serrano, E-28006 Madrid (ES)
(74) Representative: Urteaga Gimenez, José

(56) References cited:
- FR-A- 2 564 515
- US-A- 3 765 521

## Description

This invention relates to a bi-directional anti-return machanism. It serves as a regulation and safety device to be used as an instantaneous anti-return system for both directions of rotation.

The device fills the void that the prior art mechanical systems utilize for the irreversibility of the mechanical systems, which is thus obtained by means of different procedures and only then, applied in the opposite direction to that of the driving force; in other words, the prior art system could not be started in the opposite direction of that of the driving force. This is not the case of the device of the present invention which can be started in both directions.

Another fundamental and new characteristic in the present invention is that, if acted upon the output axle, the system will not allow a speed change to act upon the input axle which would lead to a perfect synchronization or balance between the rotational speed of the input axle and that of the output axle. Thus, the power absorption by the controlled section will never be greater than the driving power, thus allowing for a constant speed at all times.

If the driven element has a tendency to accelerate, the difference between the available energy on the output axle and that of the input axle, assumed to be constant, would be the energy absorbed by the device. As the device acts instantaneously to responses, the work developed is infinitesimal and thus, the energy would not be dispersed. Consequently, the outcome action of the stresses would be transferred to the anchoring points of the device.

Before proceeding with the description of the device, a brief explanation of an anti-return bi-directional device, is provided.

Let us imagine a driving system (electric motor, diesel engine, etc.) to which a device is installed in which an output axle of a machine is coupled (capstan, transporting belt, elevator pulley, etc.). Should there be a changing action in the driven machine acting upon the output axle of the device in either of the two possible directions, the action would be counteracted by the machine, without disturbing the speed of the output axle nor, therefore, the input velocity of the driving system, since the device has a ratio of 1:1 and thus, the input velocity is equal to the output speed at all times.

The applications of the safety and regulatory device are so ample that any moving machine may incorporate this system as a safety and synchronizing means, thus substituting the present mechanical systems with a greater margin of confidence, including all electrical, hydraulic, pneumatic, etc. systems, which are of greater complexity and thus involve greater expense.

In the event of a power shortage, breakdown, etc. at any time or in any position in which the system may be at the time, the driving element can be stopped, in which case, the load or driven element would remain in position without any possibility of slippage, skipping, backing-off, fall, or any type of movement by itself (as in cranes, elevators, ski lifts, transporting belts, redlers, etc.). The driven element will remain in such a position until it is re-started by acting upon the input axle again.

It is of utmost importance to state that, following the same functioning principle, the sizes of the device may differ according to the instantaneous torque to be absorbed. In this way, the full engineering development of the device will determine its size, the materials to be used and, if needed, the static or dynamic cooling system to be used in order to dissipate the generated heat.

The present invention offers a wide range of applications within the industrial area, such as:
A) Power Transmission Industry.
   As a coupling system in those power gear-boxes acting upon machines in which the same must be irreversible:
   - Bridge-cranes.
   - Capstans.
   - Elevators.
   - Load-lifting systems.
   - Belt conveyors.
   - Ski lifts, etc.
   - Synchronization in machines.
B) Construction Industry.
   - Outside power blinds.
   - Moving canopies.
   - Moving garage doors.
C) Automotive Industry.
   - Power windows.
   - Transmission systems.
D) Many more industrial applications which would be difficult to list.

The present invention may be incorporated into any transmission such as axles, pinions, wheels, gears, pulleys or joints, all of which may be hand-operated or motorized.

In short, the objective of this invention is to be of universal use and application and facilitate the resolution of problems. Its simple design, its low manufacturing cost and the fact that it requires no maintenance ensure its adaptation into the international market of instantaneous anti-return mechanisms with two rotational directions.

For a better understanding of the foregoing and as a nonlimiting example only, the following figures in variable scales are enclosed herewith:

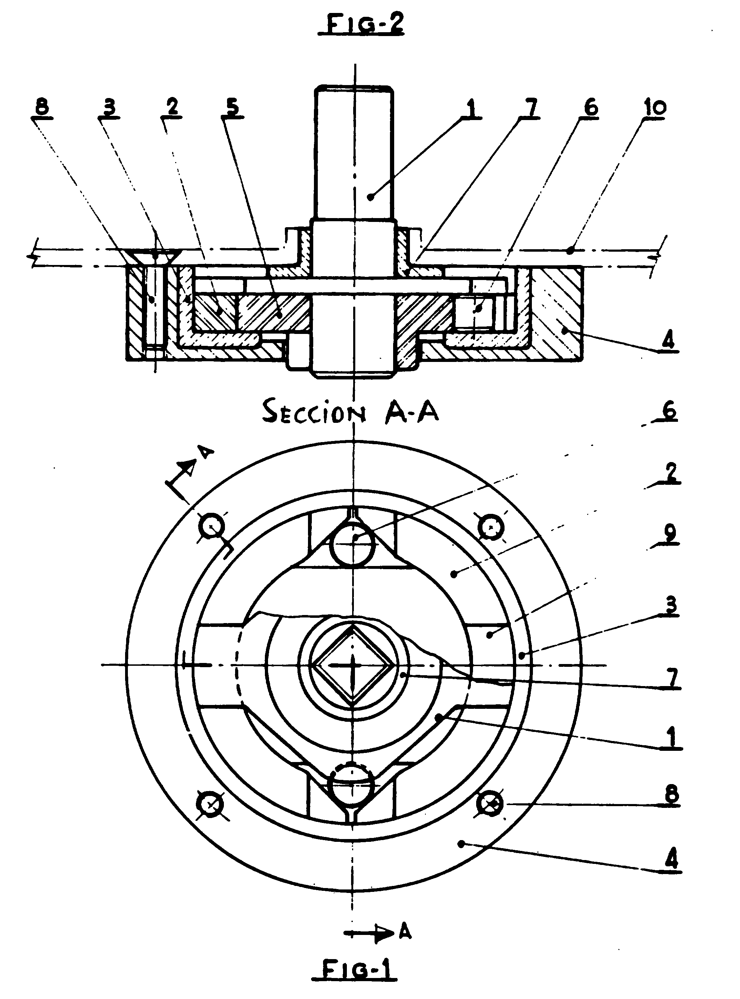

FIGURE 1: Represents the general arrangement of the regulation and safety device, from the inlet side.

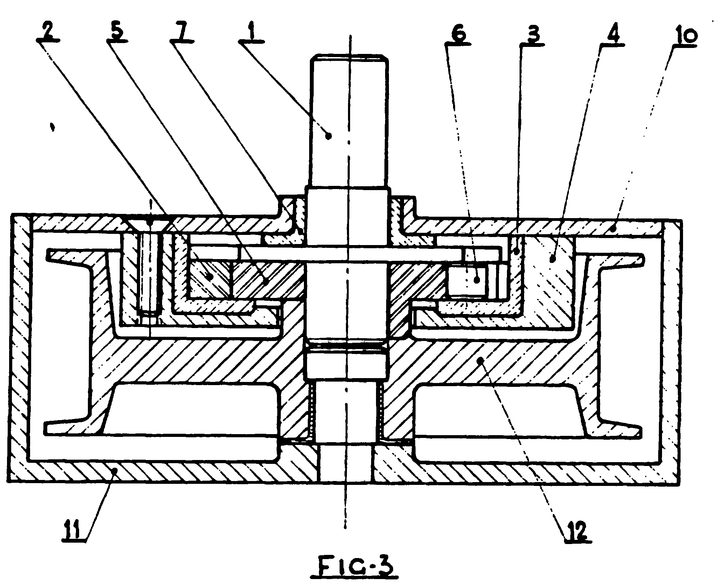

FIGURE 2: Represents an A-A section of the general arrangement of the regulation and safety device.

FIGURE 3: Represents a sectional view of the general arrangement of the regulation and safety device assembled and adapted in a different example of its wide range of uses and applications.

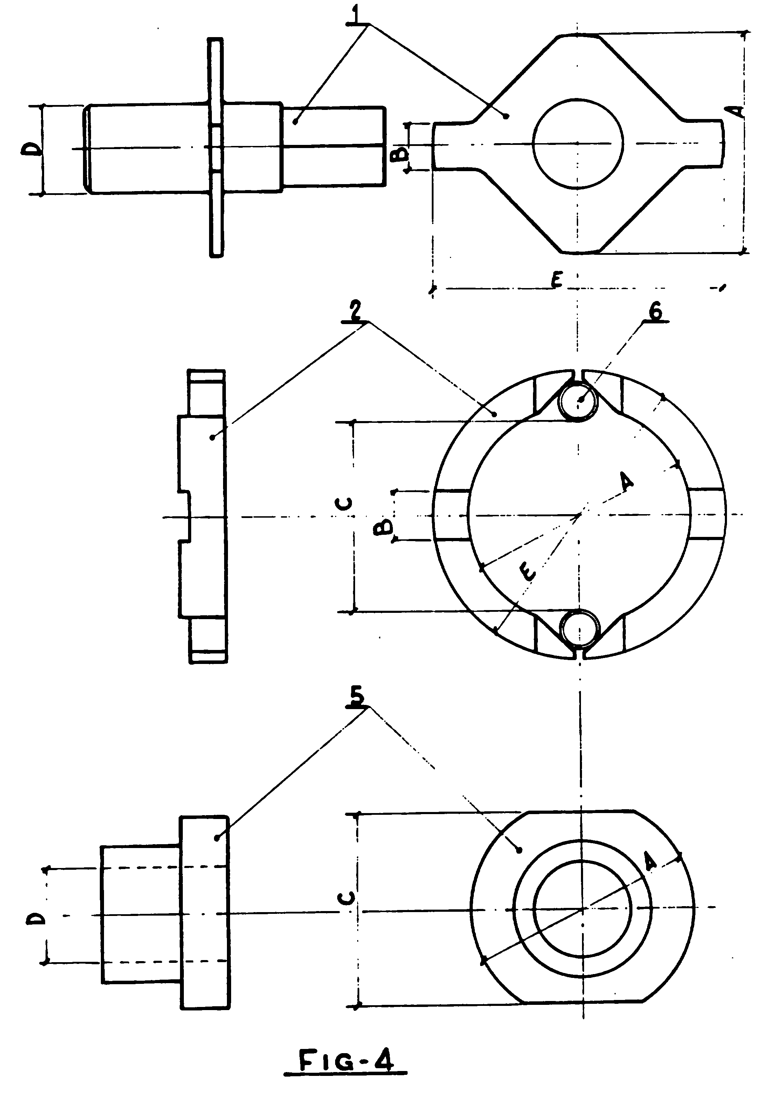

FIGURE 4: Represents the disassembly of the system moving elements with dismounting views indicating, at the same time, the corresponding assembly by means of reference letters.

FIGURE 5: Represents a plant view and an elevated section of the device in version by means of pivoting over two points equipped with two crescents.

FIGURE 6: Shows a plant view and an elevated section of the device pivoting over one point with two crescents.

FIGURE 7: Corresponds to a plant view and a elevated section of the device, with mixed action by means of roller and pivoting over two points with two crescent-shoes.

FIGURE 8: Represents a plant view and an elevated section of the device, with mixed action by means of rollers and pivoting over one point with two crescents.

FIGURE 9: Represents a plant view and an elevated section of the device, with mixed action by means of rollers and pivoting over two opposed points with four crescents.

FIGURE 10: Corresponds to a plant view and an elevated section of the whole unit with mixed action by means of rollers and pivoting over two opposed points with four crescents.

FIGURE 11: Represents a plant view and an elevated section of the whole unit with adapting spring over the crescents.

The following incorporated elements have been listed on the figures with the same values in all of them:
1. Driving axle.
2. Crescent.
3. Rolling track.
4. Case.
5. Blocking output axle.
6. Rollers or actuating means.
7. Bushing.
8. Assembly screws.
9. Crescent groove.
10. Support lid.
11. Housing.
12. Transmission driven element.
13. Internal component support base.
14. Pivoting point.
15. Crescent edging.
16. Lid fastening screw.
17. Tightening washer.
18. Adapting spring.

In reference to the above figures, which represent a diagramatic form for its industrial execution and which are included as information only and thus are in no way all-inclusive, the whole non-return mechanism will always be placed between the driving element and the driven one. If the driven element is a gear box which, in turn, drives another machine, the device could be coupled to any of the gear trains, its size depending on the corresponding resisting torque.

Therefore, the mechanical composition of the device is formed by an input driving axle (1) mounted over a bushing (7) and provided with radial projections which are introduced into the grooves of the crescents (9) executed to that end over the same (2); these pieces can be two or more and equal to the number of projections of the input driving axle (1).

The crescents are annular segments which are dragged by projections of the input driving-axle (1) as it rotates. According to the resisting torque, the size, amount and quality of material will vary. These crescents (2) concentrically rotate on the rolling track (3) and in radial contact with the inserted rollers (6). The rolling track (3) is mounted on the case (4). The rollers (6) transmit the movement to the inside end of the output axle (5). The assembly of input driving-axle (1), crescents (2), rollers (6), and output axle (5) rotate completely coupled forming a single linked element. The output axle (5) will always be coupled to the driven element (12).

If any motion acts upon the body of the output axle (5), it will try to disturb its rotation speed which is always conditioned by the speed of the input driving axle (1).

The special design of the inside end of such output axle, with two flat sides, will force the rollers to displace towards the outside, pushing the crescents (2), thus achieving a braking action on the rolling track and reducing the speed or stopping the input driving-axle (1), depending on the motion (resistance torque). Upon stopping the body of the output axle, the corresponding stresses are transmitted to the fastening points or screws (8) of the support lid (10) of the case, as part of the housing.

In short, the pressure stress blocks the system completely, transmitting the shear stress to the fastening points or screws (8) placed, as stated above, over the support lid (10) of the case (4). These stresses resulting from the momentary peak torque over the nominal of the input driving-axle (5) also have their reactions on the housing fastening points (11) which are the anchorage points to a fixed element (base, wall, etc.).

Once the system has been blocked, the mechanism can be re-started in any of the rotating directions by means of the crescents (2) which, with their special design, will displace the rollers (6) towards the inside, thus eliminating the pressure exerted upon the rolling track (3), resulting in slow rotation speed and very easy handling.

In those other versions of the mechanism (See drawings 5, 6, 7, 8, 9, 10 and 11) where the fuctioning principle is retained but the crescents are jointed over pivoing points rather than being loose, the braking action is originated (drawings 5 and 6) by means of the inside end of the output axle (5) which, with its special cam profile, displaces the crescents (2) originating the pressure on the rolling track (3). As per drawings 7, 8, 9, 10 and 11, the displacement action of the crescents takes place through the inside edge of the output axle (5) with flat sides and rollers.

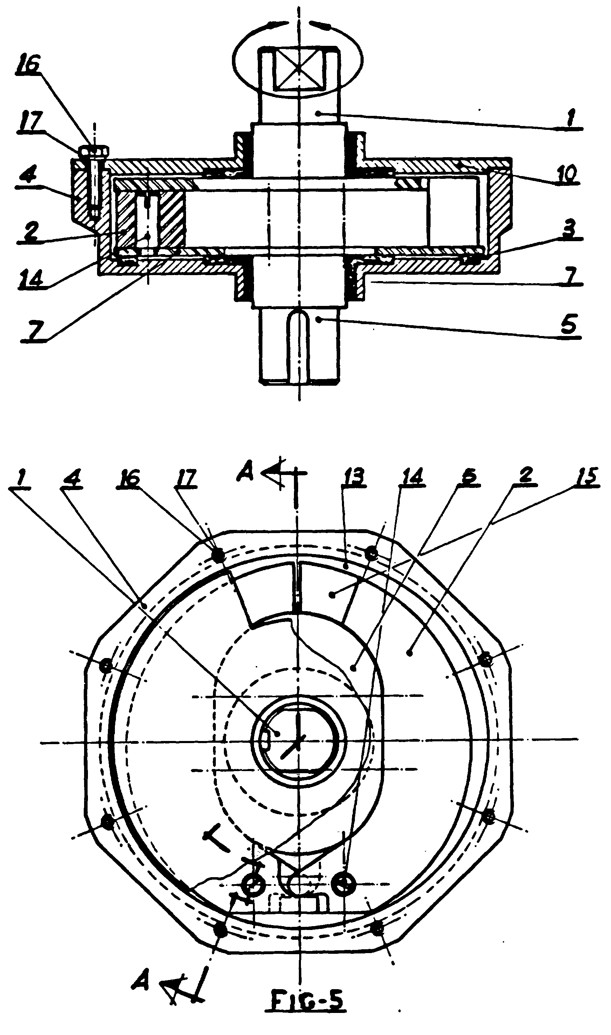

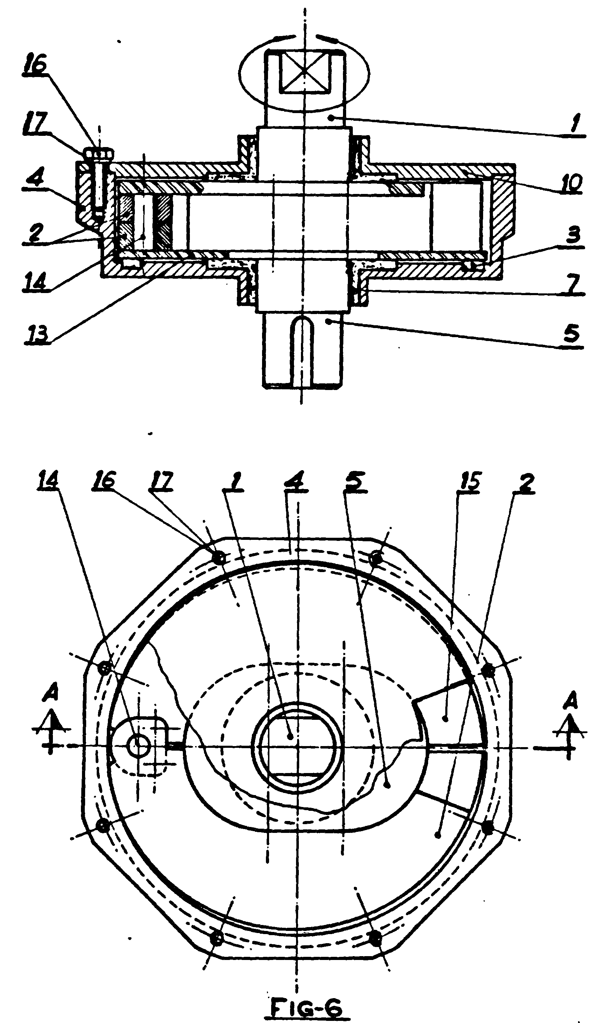

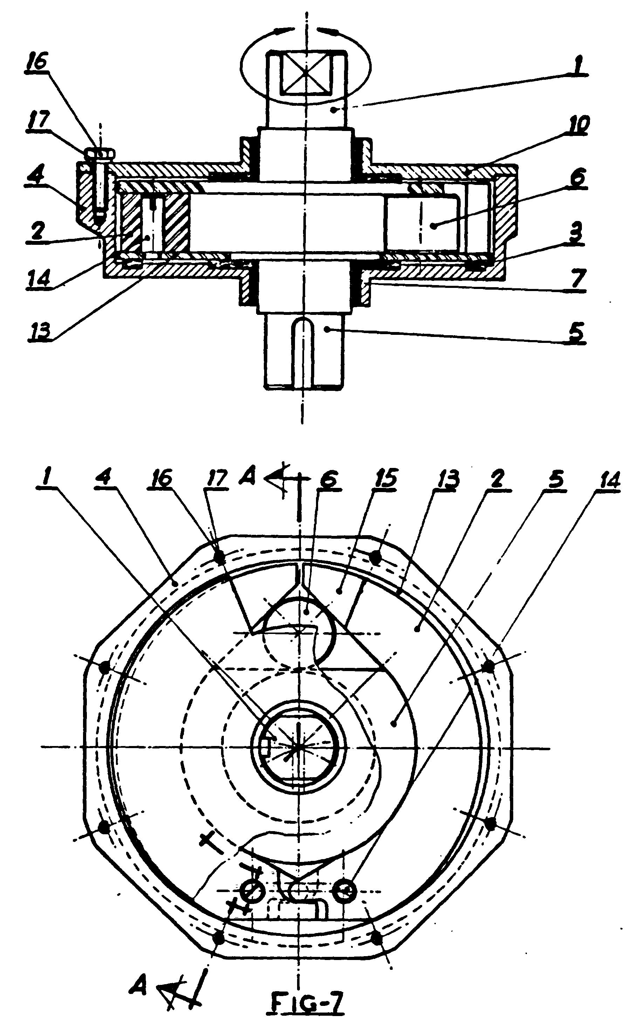

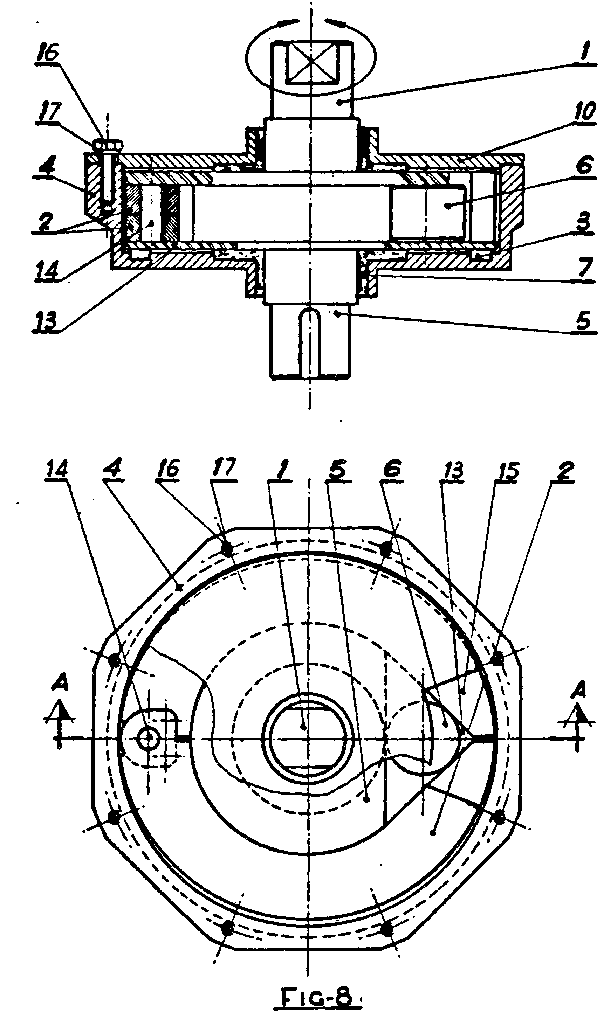

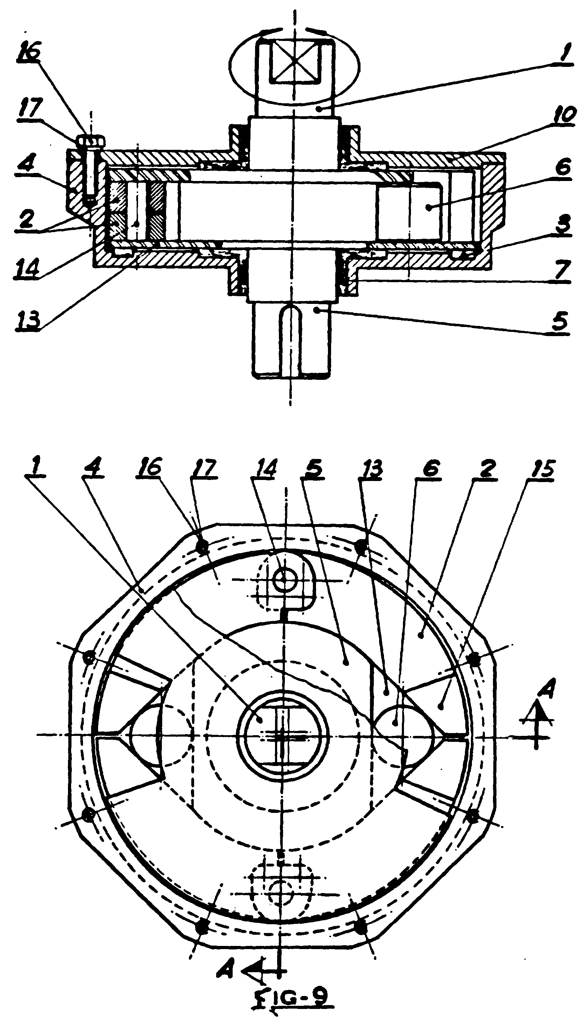

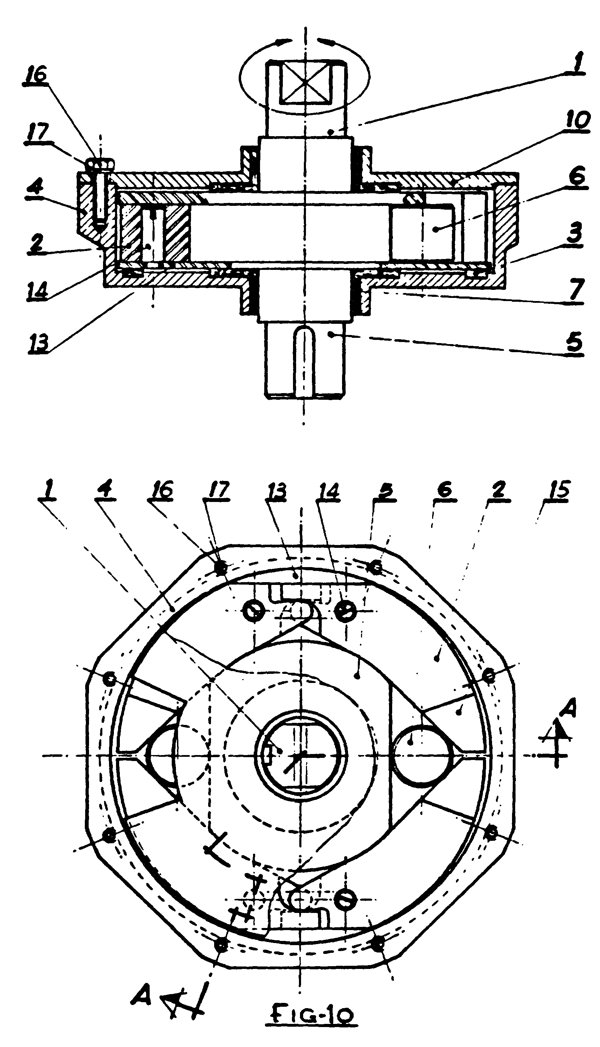

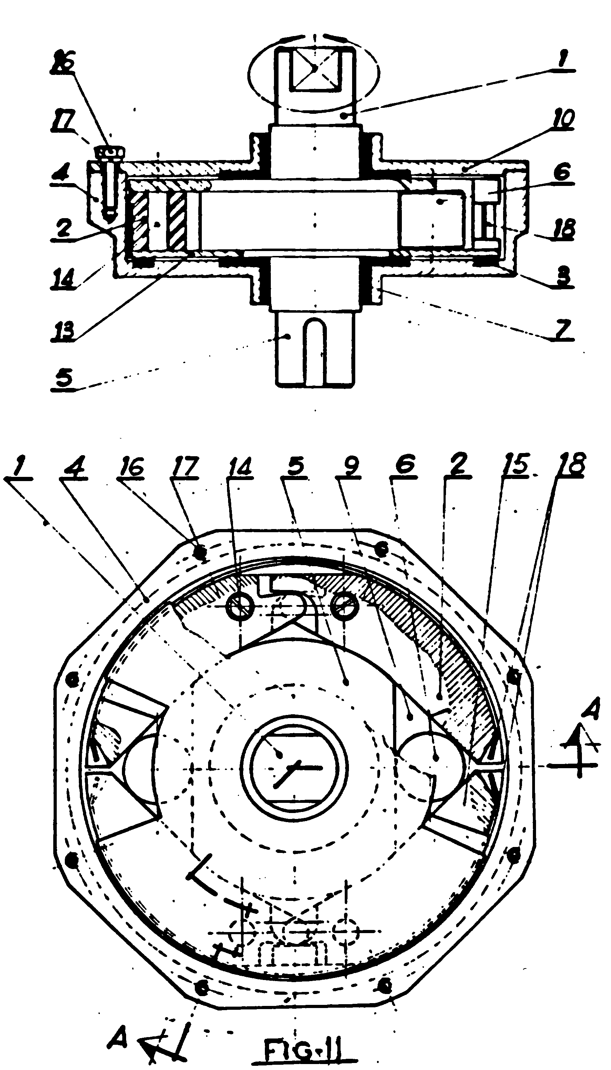

In these devices of FIGS. 5-11, the device has a support based comprised of the internal components (13), the corresponding pivoting points (14) with the crescents edging (15). The jointing of the case (4) and the lid (10) is achieved by means of the lid fastening screws (16) and tightening washers (17) in the version with rollers, as well as in the one with pivoting action. In the version with mixed action through rollers with pivoting points, an adapting spring (18) is also provided.

Once the nature of invention and examples of its practical execution have been sufficiently described, it must only be added that the size, shape and materials will vary, especially in reference to each of the elements comprising the whole unit. It must be pointed out that all elements may be modified, as stated above, provided that no change alters the essential nature of the mechanism the description of which has been given herein, description which should be taken in its broadest sense and not as a limitation of the possibilities for execution.

## Claims

1. A bi-directional anti-return mechanism comprising a cylindrical casing (4) which contains as a central part an input power axle (1) which is drivingly connected to at least two annular segments or crescents (2) whose radially outer surfaces are guided along a rolling track (3) fixed to the casing (4), each end portion of said segments or crescents (2) having an inwardly directed inclined face, an output axle (5) mounted on said input power axle (1), said output axle (5) having an outside peripheral part which supports and is shaped to correspond with the segments or crescents (2), actuating means (6) acting between the output axle (5) and the segments or crescents (2), the actuating means comprising at least two rollers (6) engaged between flat areas on the outside peripheral part of the output axle (5) and said inclined faces of the end portions of the segment or crescents (2), such that rotational torque applied to the input axle (1) is transmitted to the output axle (5) via the segments or crescents (2) and the rollers (6), and such that rotational torque applied to the output axle (5) is blocked due to the segments or crescents (2) being forced radially outwardly by the rollers (6) to frictionally engage the rolling track (3).

2. A bi-directional anti-return mechanism as defined in claim 1 characterized by the fact that the input power axle (1) has, on its central longitudinal part, a flat area of disc shape with two or more peripherical projections of rectangular shape.

3. A bi-directional anti-return mechanism as defined in claims 1 and 2 characterized by the fact that the crescents (2) show an annular segment with its edge of wedge shape and with a casing at the center placed diametrically, where the projections of the input power axle (1) flat areas are located upon assembly, the segments or crescents (2) being exteriorly adapted over the rolling track (3) and interiorly over a number of said rollers (6) placed on the flat areas of the output axle (5).

4. A bi-directional anti-return mechanism as defined in claims 1 to 3 characterized by the fact that the output axle (5) has a circular element which has the same diameter as the inside part of the crescents (2), with two or more flat areas for adaptation of the rollers (6) while the remaining longitudinal part has a smaller diameter and the central part is provided with a through hole of same diameter as that of the end of the input power axle (1).

5. A bi-directional anti-return mechanism as defined in claims 1 to 4 characterized by the fact that the set of dynamic parts such as input power axle (1), crescents (2), rollers (6) and the end of the output axle (5), are disposed and assembled inside a case (4) of inside cylindrical shape fastened to a support lid (10) which absorbs the stresses produced while in operation, by the inside dynamic parts of anti-return action.

6. A bi-directional anti-return mechanism as defined in previous claims, characterized by the fact that the crescents (2) pivot over determined points, corresponding one per each crescent or per every two crecents working as rotation points for the opening and closing of the same, being kept at the rotation point constantly, the related position between the crescents (2), input power axle (1) and output axle (5), the assembly being also applied to a mixed action with inserted rollers (6).

7. A bi-directional anti-return mechanism as defined in claim 6 characterized by the fact that, through the whole phase of assembly, whether in rollers version or in that with pivoting points as well as in the one by mixed action through rollers over pivoting points, an adaptation spring is coupled over a peripherical case foreseen to that end, on the external diameter of the crescents.

## Patentansprüche

1. Ein Zweirichtungs-Nichtrückstell-Mechanismus, bestehend aus einem zylindrischen Gehäuse (4) mit einer Eingangsantriebsachse (1) als zentralem Teil, die mit mindestens zwei Kreisring- oder halbmondförmigen Stücken (2) verbunden ist, deren Außenflächen in radialer Richtung entlang einer an dem zylindrischen Gehäuse (4) befestigten Wälzlagerlaufbahn (3) geführt sind, wobei die Flächen der Endstücke der Kreisring- oder halbmondförmigen Stücke (2) nach innen gekehrt sind und an den Endstücken eine an die erwähnte Eingansantriebsachse (1) montierte Ausgangsachse (5) mit einem peripheren Außenteil angebracht ist, dessen Perfil mit den Kreisring- oder halbmondförmigen Stücken übereinstimmt und in dem Antriebsmittel (6) angebracht sind, die zwischen der Ausgangsachse (5) und den Kreisring- oder halbmondförmigen Stücken (2) wirken. Diese Antriebsmittel (5) bestehen aus mindestens zwei Laufrädern (6), die zwischen den flachen Zonen des am Außenumfang angebrachten Teiles der Ausgangsachse (5) und den nach innen gekehrten Flächen der Endstücke der Kreisring- oder halbmondförmigen Stücke (2) befestigt sind, so daß das auf die Eingangsachse (1) ausgeübte Rotationsmoment durch die Kreisring- oder halbmondförmigen Stücke (2) und die Laufräder (6) auf die Ausgangsachse (5) übertragen wird und das auf die Ausgangsachse (5) ausgeübte Rotationsmoment dank der 5 Kreisring- oder halbmondförmigen Stücke (2), die von den Laufrädern (2) radial nach außen gedrängt werden, um sich durch Reibung mit der Wälzlagerlaufbahn (3) zu verbinden, blockiert wird.

2. Ein Zweirichtungs-Nichtrückstell-Mechanismus gemäß Anspruch 1, dadurch gekennzeichnet, daß die Eingangsantriebsachse (1) mittig in ihrer Längsseite eine flache scheibenförmige Zone mit zwei oder mehreren rechteckigen peripheren Vorsprüngen aufweist.

3. Ein Zweirichtungs-Nichtrückstell-Mechanismus gemäß Anspruch 1 und 2, dadurch gekennzeichnet, daß die Halbmonde (2) ein Kreisringstück, dessen Rand keilförmig ist und in dessen Mitte sich ein Gehäuse befindet, das diametral zum Kreisringstück angeordnet ist. Die Vorsprünge der flachen Zonen der Eingangsantriebsachse (1) sind über der Montageeinheit angebracht. Die Kreisring- oder halbmondförmigen Stücke (2) passen sich außen an die Wälzlagerlaufbahn (3) und innen an mehrere der sich in den flachen Zonen der Ausgangsachse (5) befindlichen Laufräder (6) an.

4. Ein Zweirichtungs-Nichtrückstell-Mechanismus gemäß Anspruch 1 und 2, dadurch gekennzeichnet, daß die Ausgangsachse (5) mit einem kreisförmigen Element versehen ist, dessen Durchmesser kleiner ist als der innere Durchmesser der Halbmonde (2) und zwei oder mehrere flache Zonen für die Einpassung der Laufräder (6) hat. Der Durchmesser der übrigen Längsseite ist kleiner, und im zentralen Teil befindet sich ein Durchgangsloch, dessen Durchmesser dem Durchmesser des Endstückes der Eingangsantriebsachse (1) entspricht.

5. Ein Zweirichtungs-Nichtrückstell-Mechanismus gemäß Anspruch 1 und 4, dadurch gekennzeichnet, daß die Gesamtheit der dynamischen Teile, das heißt, die Eingangsantriebsachse (1), die Halbmonde (2), die Laufräder (6) und die Endstück der Ausgangsachse (5), in ein innen zylindrisches Gehäuse (4) installiert sind, das an einem Stützdeckel befestigt ist, der die während der Nichtrückstell-Operation durch die innenliegenden dynamischen Teile verursachten mechanischen Kräfte aufnimmt.

6. Ein Zweirichtungs-Nichtrückstell-Mechanismus gemäß der vorigen Ansprüche, dadurch gekennzeichnet, daß sich die Halbmonde (2) in bestimmten Punkten - es existiert jeweils ein Punkt für einen oder zwei Halbmonde - drehen. Diese Punkte sind Rotationspunkte für das Öffnen und Schließen des Mechanismus. Die Position der Halbmonde (2), der Eingangsantriebsachse (1) und der Ausgangsachse (5) bleibt dabei ständig im Rotationspunkt, wobei für die Gesamtheit des Mechanismus auch ein gemischter Antrieb, mit Hilfe der Laufräder (6), verwendet werden kann.

7. Ein Zweirichtungs-Nichtrückstell-Mechanismus gemäß Anspruch 6, dadurch gekennzeichnet, daß sowohl in der Laufrad- und Rotationspunktausführung als auch in der gemischten Laufräder-Rotationspunkt-Antriebsversion eine Anpassungsfeder über einem peripheren Gehäuse am äußeren Durchmesser der Halbmonde angebracht ist.

## Revendications

1. Un mécanisme anti-retour bi-directionnel qui comprend une boite cylindrique (4) contenant comme partie centrale un axe d'entrée de puissance (1) qui est connecté mécaniquement à, au moins, deux segments ou croissants annulaires (2) dont les surfaces radialement externes sont guidées le long d'une voie de roulement (3) fixée à la boite (4), chaque partie finale des segments ou croissants mentionnés (2) ayant une face inclinée directement vers l'intérieur, un axe de sortie (5) monté sur l'axe d'entrée de puissance mentionné (1) , le dit axe de sortie (5) ayant une partie périphérique externe qui supporte et est conformée pour correspondre aux segments ou aux croissants (2), des moyens d'actionnement (6) agissant entre l'axe de sortie (5) et les segments ou croissants (2), les moyens d'actionnement comprenant au moins deux rouleaux (6) engagés entre des surfaces plates sur la partie périphérique plate de l'axe de sortie (5) et les faces inclinées mentionnées des portions finales du segment ou des croissants (2) de façon à ce que le couple de torsion appliqué à l'axe d'entrée (1) soit transmis à l'axe de sortie (5) via les segments ou croissants (2) et les rouleaux (6) et de façon à ce que le couple de rotation appliqué à l'axe de sortie (5) soit bloqué dû au fait que les segments ou les croissants (2) soient forcés radialement vers l'extérieur par les rouleaux (6) pour engager par friction la voie de roulement (3)

2. Un mécanisme anti-retour bi-directionnel tel qu'il est défini dans la revendication 1 caractérisé par le fait que l'axe d'entrée de puissance (1) a, sur sa partie longitudinale centrale, une surface plate en forme de disque avec deux projections périphériques ou plus, de forme rectangulaire de 2,6 cm

3. Un mécanisme anti-retour bi-directionnel tel qu'il est défini dans les revendications 1 et 2 par le fait que les croissants (2) ont un segment annulaire avec leurs bords en forme de coin et avec une boite au centre placée diamétralement, où les projections des surfaces plates de l'axe d'entrée de puissance (1) se situent sur l'assemblage, les segments ou les croissants (2) étant adaptés extérieurement sur la voie de roulement (3) et intérieurement sur un certain nombre des roulements en question (6) placé sur les surfaces plates de l'axe de sortie (5).

4. Un mécanisme anti-retour bi-directionnel tel qu'il est défini dans les revendications 1 à 3 caractérisé par le fait que l'axe de sortie (5) a un élément circulaire qui a le même diamètre que la partie interne des croissants (2) avec deux surfaces plates ou plus pour l'adaptation des rouleaux (6), tandis que la partie longitudinale restante a un diamètre plus petit et que la partie centrale est pourvue d'un trou de même diamètre que celui de l'extrémité del'axe d'entrée de puissance (1).

5. Un mécanisme anti-retour bi-directionnel tel qu'il est défini dans les revendications 1 à 4 caractérisé par le fait que l'ensemble des parties dynamiques telles que l'axe d'entrée de puissance (1), les croissants (2), les rouleaux (6) et l'extrémité de l'axe de sortie (5) sont disposés et assemblés à l'intérieur d'une boite (4) dont la forme intérieure est cylindrique, attachée à un couvercle de support (10) qui absorbe les tensions qui se produisent au cours des opérations, par les parties dynamiques internes d'action anti-retour.

6. Un mécanisme anti-retour bi-directionnel tel qu'il est défini dans les revendications antérieures, caractérisé par le fait que les croissants (2) pivotent autour de certains points déterminés, un correspondant à chaque croissant ou à deux croissants et travaillant comme des points de rotation pour l'ouverture et la fermeture de ceux-ci, étant constamment maintenu au point de rotation, la position entre les croissants (2), l'axe d'entrée de puissance (1) et l'axe de sortie (5), l'ensemble étant aussi appliqué à une action mixte avec des rouleaux insérés (6).

7. Un mécanisme anti-retour bi-directionnel tel qu'il est défini dans la revendication 6 caractérisé par le fait que,tout au long de la phase d'assemblage, ou bien dans la version rouleaux ou dans celle avec des points de pivotage, ou aussi dans celle d'action mixte avec des rouleaux sur des points pivotants, on couple un ressort d'adaptation sur une boite périphérique prévue à cette fin sur le diamètre externe des croissants.
